# EUROPÄISCHE PATENTANMELDUNG

(11) **EP 1 426 705 A2**
(43) Veröffentlichungstag der Anmeldung: **09.06.2004**
(21) Anmeldenummer: 03024631.8
(22) Anmeldetag: 27.10.2003
(51) Int. Cl.: F24F 11/047, G01F 1/36

(54) **Verfahren zur Inbetriebnahme eines Luftleitungssystems und Vorrichtung zum Durchführen des Verfahrens**

(30) Priorität: 08.11.2002 DE 10251929
(71) Anmelder: Siegwart, Emil, 66280 Sulzbach (DE)
(72) Erfinder: Siegwart, Emil, 66280 Sulzbach (DE)
(74) Vertreter: Bernhardt, Winfrid, Dr.-Ing.

(57) **Zusammenfassung**

In einem Luftleitungssystem mit einer Vielzahl von, insbesondere jeweils einem Belüftungsauslass zugeordneten, Strömungsmengenreglern wird den Strömungsmengenreglern jeweils eine als ständiger Bestandteil des Leitungssystems in diesem verbleibende Messvorrichtung für die Strömungsmenge zugeordnet und bei der Inbetriebnahme wird die Luftzufuhr zu den Strömungsmengenreglern mit Hilfe der Messvorrichtungen überprüft.

Der Mehraufwand für den Einbau der Messvorrichtungen und das Durchmessen des Luftleitungssystems bei der Inbetriebnahme ist geringer als der durchschnittliche Aufwand für nachträgliche Fehlerbehebungen, bei denen das fertige Gebäude stellenweise wieder aufgerissen werden muß und das Gebäude oft teilweise für die Nutzung ausfällt. Da die Messvorrichtungen in großer Stückzahl benötigt werden, lassen sie sich entsprechend kostengünstig fertigen.

Eine geeignete Messvorrichtung wird vorgestellt.

## Beschreibung

Die Erfindung bezieht sich auf ein Verfahren zur Inbetriebnahme eines Luftleitungssystems mit einer Vielzahl von, insbesondere jeweils einem Belüftungsauslass zugeordneten, Strömungsmengenreglern.
Sie bezieht sich ferner auf eine Vorrichtung zum Durchführen des Verfahrens.

Die zur Belüftung von Gebäuden, oft über einer abgehängten Decke, eingerichteten Luftleitungssysteme haben z.B. 40, aber auch bis zu 1000 Belüftungsauslässe und umfassen eine Vielzahl von Verzweigungen, Abgängen, Übergängen zwischen unterschiedlichen Rohrdurchmessern usw.. Sie haben damit einen Umfang und eine Komplexität, die eine eingehende Planung und Berechnung und eine einwandfreie bauliche Ausführung verlangen. Das gilt auch dann, wenn jedem Belüftungsauslass ein Strömungsmengenreglerzugeordnet ist, der bei schwankenden Vordrücken eine gleiche Belüftung des betreffenden Raumes oder Raumabschnittes sicherstellt. Auch der Strömungsmengenregler bedarf einer Beaufschlagung mit Druck bzw. Luftmengen in vorgegebenen Grenzen, vor allem in einer Mindestgröße.

Infolge des Rationalisierungsdruckes stellen sich jedoch in steigendem Maße Mängel ein, vor allem bei der Montage durch Subunternehmen und Nichtfachleute. Die nicht für mechanische Beanspruchungen ausgelegten Wickelrohr- oder Flexrohrleitungen werden beschädigt, z.B. eingedrückt, und dennoch eingebaut. Bauteile werden falsch verwendet. Aber auch Berechnungsfehler kommen vor.

Die Folge ist ein extremer Aufwand für die Fehlersuche und -behebung nach Fertigstellung und Bezug des Gebäudes und Feststellung der Mängel.

Der Erfindung liegt die Aufgabe zugrunde, den Gesamtaufwand für den Bau einer Belüftungsanlage einschließlich nachträglicher Mängelbehebung zu verringern.

Gemäß der Erfindung wird dieser Zweck in der Weise erfüllt, dass den Strömungsmengenreglern jeweils eine als ständiger Bestandteil des Leitungssystems in diesem verbleibende Messvorrichtung für die Strömungsmenge zugeordnet wird und bei der Inbetriebnahme die Luftzufuhr zu den Strömungsmengenreglern mit Hilfe der Messvorrichtungen überprüft wird.

Der Mehraufwand für den Einbau der Messvorrichtungen und das Durchmessen des Luftleitungssystems bei der Inbetriebnahme ist geringer als der durchschnittliche Aufwand für die nachträglichen Fehlerbehebungen, bei denen das fertige Gebäude stellenweise wieder aufgerissen werden muß und das Gebäude oft teilweise für die Nutzung ausfällt. Da die Messvorrichtungen in großer Stückzahl benötigt werden, lassen sie sich entsprechend kostengünstig fertigen.

Der Vorteil wird besonders dann erreicht, wenn die Messvorrichtungen in einer montagefreundlichen Form zur Verfügung stehen. Eine geeignete Messvorrichtung zu schaffen, liegt hier als weitere Aufgabe vor.

Die erfindungsgemäße Messvorrichtung zum Durchführen des Verfahrens kennzeichnet sich zunächst dadurch, dass sie in einem gesonderten Leitungsbauteil der Luftleitung eingerichtet ist. Es braucht also, ohne viel Beschäftigung mit der Messvorrichtung, nur ein kurzes Stück Leitung in die Luftleitung eingebaut zu werden.

Das kann in zweckmäßiger Weise unmittelbar neben dem Strömungsmengenregler geschehen, wo ohnehin ein gesondertes Leitungsbauteil zwischengesetzt wird:

Vorzugsweise ist das Leitungsbauteil beiderseits mittels einer an sich bekannten Rollgummi-Steckverbindung in die Luftleitung einsetzbar und dabei an einer Seite mit einem gleichartigen, den betreffenden Strömungsmengenregler aufweisenden Einbauteil zusammensetzbar. Grundsätzlich ist aber auch ein gesondertes Leitungsbauteil gemeinsam für den Strömungsmengenregler und die Messvorrichtung möglich.

In vorteilhafter Ausgestaltung besteht die Messvorrichtung aus einem auf zwei verschiedenen Querschnitten mit Messleitungsanschlüssen versehenen Einbauteil, an dem eine Venturi-Düse ausgebildet ist, die vorzugsweise frei im Querschnitt der Luftleitung endet.

Zur Durchführung der Messung wird dann jeweils eine weitere Messeinrichtung angeschlossen, die die an den beiden Querschnitten auftretenden Drücke misst und auswertet.

Nach einer besonders vorteilhaften Weiterbildung der Erfindung weist das Einbauteil eine im wesentlichen rechtwinklig an die Leitungswandung angrenzende, ringförmige Staufläche auf, in der mindestens ein Messleitungsanschluss angeordnet ist, und im Anschluss an die Staufläche weist es weiterhin die Venturi-Düse auf, in deren Verengung mindestens ein anderer Messleitungsanschluss angeordnet ist.

Noch einmal eine besonders vorteilhafte Weiterbildung der Erfindung besteht darin, dass in der Staufläche und in der Verengung jeweils mehrere Messleitungsanschlüsse angeordnet sind, die jeweils durch eine im Zwischenraum zwischen der Leitungswandung und der Venturi-Düse verlaufende Ringleitung aus elastischem Material verbunden sind, aus der ein Anschlussstutzen herausgeführt ist, der dann durch die Leitungswandung nach außen hin durchtritt. Die Messleitungsanschlüsse haben dabei gemäß weiterer Erfindung die Form an dem Blech des Einbauteils befestigter und in die elastische Ringleitung klemmend eingesteckter, am Ende widerhakenförmig gestalteter Nippel.

Weitere Maßnahmen, die zur vorteilhaften Ausgestaltung der Erfindung dienen können, sind in der nachfolgenden Beschreibung eines Ausführungsbeispiels sowie in den Ansprüchen angegeben.

Die Zeichnungen geben das Ausführungsbeispiel wieder.
- Fig. 1: zeigt ein eine Messvorrichtung aufweisendes Leitungsbauteil zusammen mit einem gleichartigen Leitungsbauteil, das einen Strömungsmengenregler aufweist, in axialem Schnitt,
- Fig. 2: zeigt einen Ausschnitt aus Fig. 1 in größerem Maßstab,
- Fig. 3: zeigt eine Ansicht eines Einbauteils gemäß Fig. 2 von links,
- Fig. 4 bis 6: zeigen Einzelteile in jeweils axialem Schnitt und
- Fig. 7: zeigt ein weiteres Einzelteil in Ansicht.

Ein Leitungsbauteil 1 weist ein Gehäuse 2 in Form eines kurzen Rohrstücks auf, das an seinen beiden Enden zum Einbau in eine Luftleitung mittels einer Rollgummi-Steckverbindung eingerichtet ist. Am linken Ende ist das, mit 3 bezeichnete, innere Teil, am rechten Ende das, mit 4 bezeichnete, äußere Teil der Rollgummi-Steckverbindung ausgebildet. Die Rollgummi-Steckverbindung ist aus EP 0 596 230 und EP 1 074 779 bekannt.

In dem Gehäuse 2 ist ein Einbauteil 5 angeordnet. Es hat die Form einer Venturi-Düse 6, jedoch mit einer senkrecht zur Strömungsrichtung ausgerichteten Staufläche 7 an der Eingangsseite. Mit einer Abkantung 8 in Strömungsrichtung am Außenrand der Staufläche 7 liegt das Einbauteil 5 an der Leitungswandung an. Durch Punktschweißung ist es hier befestigt.

An der Staufläche 7 befinden sich vier Messleitungsanschlüsse in Gestalt von Nippeln 9. Am Ende des engsten Bereiches der Venturi-Düse 6, der eine gewisse axiale Länge hat, befinden sich vier weitere Messleitungsanschlüsse in Gestalt von Nippeln 10.

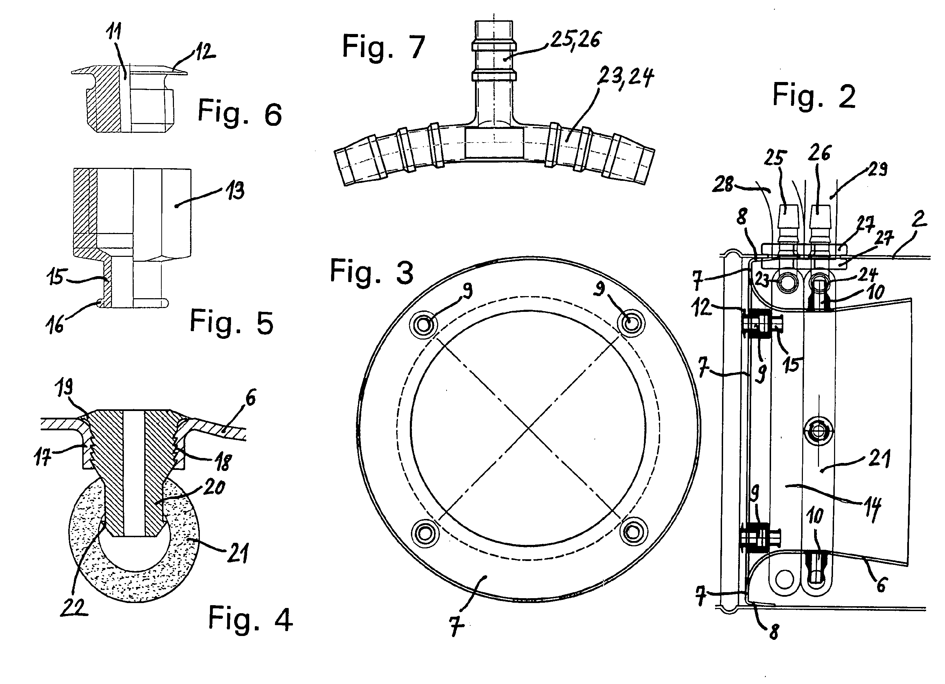

Wie Fig. 2, 5 und 6 erkennen lassen, bestehen die Nippel 9 aus einem in eine Bohrung des Bleches des Einbauteils 5 eingesteckten, kurzen, hohlen Schraubbolzen 11 mit flachem Kopf 12 und einer Mutter 13, an der ein in eine Ringleitung 14 aus elastischem Material eingesteckter Endabschnitt 15 ausgebildet ist. Der Endabschnitt 15 ist an seinem Ende mit einem hinter die Wand der Ringleitung 14 greifenden Bund 16 widerhakenartig ausgebildet. Anders als in Fig. 2 aus Darstellungsgründen gezeichnet, liegt der Kopf 12 nach Anziehen der Mutter 13 fest auf der Staufläche 7 an.

Wie in Fig. 4 im einzelnen dargestellt, sind die Nippel 10 in durch Stanzprägung an dem Blech des Einbauteils 5 gebildete kurze Hohlstutzen 17 eingepresst und mit diesen verzahnt. Die mit 18 bezeichnete Verzahnung ist widerhakenförmig gegenüber einem flachen Kopf 19 auf der Innenseite der Venturi-Düse 6 ausgebildet. Mit einem Endabschnitt 20 stecken die Nippel 10 dicht in einer Ringleitung 21 aus elastischem Material. Ein Widerhaken 22 greift dabei hinter die Wandung der Ringleitung 21.

Die beiden Ringleitungen 14 und 21 sind jeweils geschlossen durch ein in Fig. 7 in Ansicht dargestelltes Formteil 23 bzw. 24, auf das die beiden Schlauchenden aufgesteckt sind. Ein an den Formteilen 23 und 24 angeordneter Anschlussstutzen 25 bzw. 26 führt radial aus der Ringleitung heraus und durch die Leitungswandung hindurch nach außen. An der Durchtrittsstelle stecken die Anschlussstutzen 25 und 26 dicht in zwei elastischen Kunststoffscheiben 27, die miteinander verbunden und dadurch von innen und außen dicht an die Leitungswandung angelegt worden sind.

Bei 28 und 29 sind zur Durchführung der Messung an die Anschlussstutzen 25 und 26 angesetzte Messschläuche dargestellt.

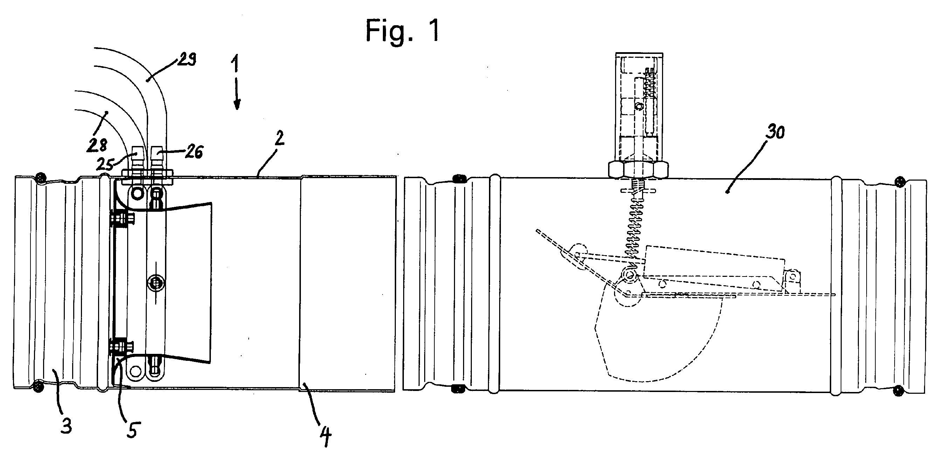

Ein gleichfalls ein Leitungsbauteil darstellender Strömungsmengenregler 30 kann mit dem Leitungsbauteil 1 in der aus Fig. 1 ersichtlichen Weise mittels Rollgummi-Steckverbindung zusammengesetzt werden. Der Strömungsmengenregler 30 ist an sich durch Benutzung bekannt und in der DE 102 04 387 beschrieben. Die betreffende Bauart ist bekannt aus DE 23 33 694, DE 24 48 271, DE 26 18 037, DE 27 58 352, DE 28 23 735, DE 28 35 052 und DE 33 32 529.

Die in dem Leitungssystem verbleibenden Messvorrichtungen können ggf. auch später noch benutzt werden bei normalen Reparaturen des Leitungssystems.

Es versteht sich, dass das Leitungssystem zusätzlich zu den Strömungsmengenreglern, denen erfindungsgemöß eine Messvorrichtung zugeordnet ist, auch Strömungsmengenregler ohne zugeordnete Messvorrichtung aufweisen kann, wo eine Messvorrichtung aufgrund besonderer Umstände nicht erforderlich ist.

## Patentansprüche

1. Verfahren zur Inbetriebnahme eines Luftleitungssystems mit einer Vielzahl von, insbesondere jeweils einem Belüftungsauslass zugeordneten, Strömungsmengenreglern,
**dadurch gekennzeichnet,**
**dass** den Strömungsmengenreglern jeweils eine als ständiger Bestandteil des Leitungssystems in diesem verbleibende Messvorrichtung (5-27) für die Strömungsmenge zugeordnet wird und bei der Inbetriebnahme die Luftzufuhr zu den Strömtingsmengenreglern mit Hilfe der Messvorrichtungen überprüft wird.

2. Messvorrichtung zum Durchführen eines Verfahrens nach Anspruch 1,
**dadurch gekennzeichnet,**
**dass** sie in einem gesonderten Leitungsbauteil (1) der Luftleitung eingerichtet ist.

3. Messvorrichtung nach Anspruch 2,
**dadurch gekennzeichnet,**
**dass** sie aus einem auf zwei verschiedenen Querschnitten mit Messleitungsanschlüssen (9;10) versehenen Einbauteil (5) besteht, an dem eine Venturi-Düse (6) ausgebildet ist, die vorzugsweise frei im Querschnitt der Luftleitung endet.

4. Messvorrichtung nach Anspruch 3,
**dadurch gekennzeichnet,**
**dass** das Einbauteil (5) eine im wesentlichen rechtwinklig an die Leitungswandung angrenzende, ringförmige Staufläche (7) aufweist, in der mindestens ein Messleitungsanschluss (9) angeordnet ist, und im Anschluss an die Staufläche weiterhin die Venturi-Düse (6) aufweist, in deren Verengung mindestens ein anderer Messleitungsanschluss (10) angeordnet ist.

5. Messvorrichtung nach Anspruch 4,
**dadurch gekennzeichnet,**
**dass** das Einbauteil (5) mit einer Abkantung (8) am Außenrand der Staufläche (7), vorzugsweise in Strömungsrichtung, an der Leitungswandung anliegt und befestigt ist.

6. Messvorrichtung nach einem der Ansprüche 3 bis 5,
**dadurch gekennzeichnet,**
**dass** in der Staufläche (7) und/oder in der Verengung der Venturi-Düse (6) (jeweils) mehrere Messleitungsanschlüsse (9;10) angeordnet sind, die (jeweils) durch eine im Zwischenraum zwischen der Leitungswandung und der Venturi-Düse (6) verlaufende Ringleitung (14;21) verbunden sind, aus der ein Anschlussstutzen (25;26) herausgeführt ist, der dann durch die Leitungswandung nach außen hindurchtritt.

7. Messvorrichtung nach Anspruch 6,
**dadurch gekennzeichnet,**
**dass** die Ringleitung(en) (14;21) aus elastischem Material besteht (bestehen) und die Messleitungsanschlüsse die Form an dem Blech des Einbauteils befestigter und in die Ringleitung (14;21) klemmend eingesteckter, vorzugsweise am Ende widerhakenförmig (16;22) gestalteter, Nippel (9;10) aufweisen.

8. Messvorrichtung nach Anspruch 7,
**dadurch gekennzeichnet,**
**dass** mindestens ein Teil der Nippel (9), vorzugsweise die an der Staufläche (7) angeordneten, aus einem in eine Bohrung des Bleches des Einbauteils eingesteckten kurzen, hohlen Schraubbolzen (11) mit flachem Kopf (12) und einer Mutter (13) bestehen, an der ein in die Ringleitung (14) eingesteckter Endabschnitt (15) ausgebildet ist.

9. Messvorrichtung nach Anspruch 7,
**dadurch gekennzeichnet,**
**dass** mindestens ein Teil der Nippel (10), vorzugsweise die an der Verengung der Venturi-Düse (6) angeordneten, in durch Stanzprägung an dem Blech des Einbauteils (5) gebildete kurze Hohlstutzen (17) eingepresst sind, mit denen sie vorzugsweise verzahnt sind, vorzugsweise durch eine zu einem flachen Kopf (19) auf der Innenseite der Venturi-Düse (6) widerhakenförmige Verzahnung (18).

10. Messvorrichtung nach einem der Ansprüche 2 bis 9,
**dadurch gekennzeichnet,**
**dass** das Leitungsbauteil (1), vorzugsweise beiderseits, mittels einer Rollgummi-Steckverbindung (3,4) in die Luftleitung einsetzbar ist, vorzugsweise an einer Seite mit einem gleichartigen, den betreffenden Strömungsmengenregler aufweisenden Leitungsbauteil (30) zusammensetzbar ist.
